# EUROPEAN PATENT APPLICATION

(11) **EP 1 953 524 A2**
(43) Date of publication of application: **06.08.2008**
(21) Application number: 08001858.3
(22) Date of filing: 31.01.2008
(51) Int. Cl.: G01N 15/06

(54) **Soot detecting apparatus and soot detecting method**

(30) Priority: 31.01.2007 JP 2007020477; 14.12.2007 JP 2007324035
(71) Applicant: NGK SPARK PLUG CO., LTD, Mizuho-ku Nagoya-shi Aichi (JP)
(72) Inventor: Komatsu, Daisuke, Nagoya-shi Aichi (JP); Nadanami, Norihiko, Nagoya-shi Aichi (JP); Katsuta, Masato, Nagoya-shi Aichi (JP); Yokoi, Hitochi, Nagoya-shi Aichi (JP); Kondo, Tomonori, Nagoya-shi Aichi (JP); Matsutani, Wataru, Nagoya-shi Aichi (JP); Imaeda, Kouichi, Nagoya-shi Aichi (JP)
(74) Representative: Zimmermann, Gerd Heinrich

(57) **Abstract**

A soot detecting apparatus includes: a high voltage generating unit for generating a high voltage; a discharge sensor which includes a pair of electrodes to be, disposed in an atmosphere to be detected, for causing a spark discharge at a discharge voltage dependent upon soot concentration in the atmosphere when the high voltage is applied across the pair of electrodes; a first detection unit for detecting a first discharge voltage value when the spark discharge occurs in the discharge sensor upon application of the high voltage of a predetermined voltage polarity; a first output unit for determining a first soot concentration value based on the first discharge voltage value; and a changeover unit for converting the predetermined voltage polarity to an opposite voltage polarity for causing reverse spark discharge at the pair of electrodes of the discharge sensor.

## Description

### FIELD OF THE INVENTION

The present invention relates to a soot detecting apparatus and a soot detecting method for detecting soot contained in exhaust gases from a fuel combustion apparatus such as an internal combustion engine.

### BACKGROUND OF THE INVENTION

Conventionally, as a soot detecting apparatus of this type, for example, a smoke detecting apparatus disclosed in JP-U-64-50355 has been proposed. In this smoke detecting apparatus, a voltage is applied between a pair of electrodes provided in exhaust gases to generate spark discharge between the pair of electrodes, and the concentration of soot in the exhaust gases is detected on the basis of the discharge voltage at the time when this spark discharge occurred.

### SUMMARY OF THE INVENTION

However, according to the above-described smoke detecting apparatus, the discharge voltage disadvantageously changes substantially irrespective of the concentration of the soot in the exhaust gases, consequently resulting in the phenomenon of a decline in the detection accuracy of the soot.

Upon examining this phenomenon, it was confirmed that, in the process of using the above-described smoke detecting apparatus, soot and the like in the exhaust gases are unlikely to adhere to the negative electrode of the aforementioned pair of electrodes but adhere to the positive electrode. Then, it was consequently confirmed that this adhesion constitutes a cause resulting in the large variation of the discharge voltage.

Accordingly, an object of the invention is to provide a soot detecting apparatus and a soot detecting method for minimizing the variation of the discharge voltage generated from the pair of electrodes of the discharge sensor so as to cope with the above-described problem and improve the soot detection accuracy.

According to a first aspect of the invention there is provided a soot detecting apparatus comprising: a high voltage generating unit for generating a high voltage; a discharge sensor having a pair of electrodes which, in use, are disposed in an atmosphere to be detected, for causing a spark discharge at a discharge voltage dependent upon soot concentration in the atmosphere when the high voltage is applied across the pair of electrodes; a first detection unit for detecting a first discharge voltage value when the spark discharge occurs in the discharge sensor upon application of the high voltage having a predetermined voltage polarity; a first output unit for determining a first soot concentration value based on the first discharge voltage value, and a changeover unit for converting the predetermined voltage polarity of the high voltage to be applied to the pair of electrodes by the high voltage generating unit to an opposite voltage polarity.

Since the changeover unit is thus provided, it is possible to apply a high voltage of the opposite voltage polarity across the pair of electrodes of the discharge sensor. As a result of this, even if adherents such as soot are adhered to a positive electrode in the case where the electrode is normally used with a predetermined electrode polarity, the electrode is converted to a negative electrode with an opposite polarity, so that adherents can be cleaned appropriately.

Then, since adherents are absent when the electrode is normally used as the positive electrode, the discharge voltage generated between the pair of electrodes becomes extremely stable without being affected by the adherents. As a result, the accuracy of detecting the soot concentration by the soot detecting apparatus can be ensured satisfactorily.

In addition, according to a second aspect of the invention, the first output unit preferably outputs the first soot concentration value on the basis of a plurality of the first discharge voltage values. As a result of this, the soot detection accuracy further improves as compared to the case where the first soot concentration value is outputted on the basis of a single first discharge voltage value. It should be noted that, as for the "outputting of the first soot concentration value on the basis of a plurality of the first discharge voltage values," it is possible to cite a case where the first soot concentration value is outputted from an average value of a plurality of the first discharge voltage values.

Furthermore, according to a third aspect of the invention, the soot detecting apparatus may preferably further comprise: a second detection unit for detecting a second discharge voltage value in response to an occurrence of a reverse spark discharge in the discharge sensor upon application of the high voltage having the opposite voltage polarity; and a second output unit for determining a second soot concentration value based on the second discharge voltage value. Thus, also in the reverse spark discharge used for cleaning, the spark discharge is generated in the opposite direction to the case of normal use at a second discharge voltage value dependent upon the soot in the atmosphere to be detected. For this reason, by detecting that second discharge voltage value and determining the second soot concentration value based on the second discharge voltage value, it is possible to detect the soot concentration even during cleaning.

Furthermore, according to a fourth aspect of the invention, the second output unit preferably determines the second soot concentration value based on a plurality of the second discharge voltage values. As a result of this, the soot detection accuracy further improves as compared to the case where the second soot concentration value is determined on the basis of a single second discharge voltage value. It should be noted that, as for the "determining of the second soot concentration value based on a plurality of the second discharge voltage values, "it is possible to cite a case where the second soot concentration value is determined from an average value of a plurality of the second discharge voltage values.

Furthermore, according to a fifth aspect of the invention, soot detecting apparatus may preferably further comprise: an evaluating unit for evaluating soot concentration based on both the first soot concentration value and the second soot concentration value. As a result of this, the soot detection accuracy further improves as compared to the case where the soot concentration is detected by using only the first soot concentration value and the case where the soot is detected by using only the second soot concentration value. It should be noted that, according to a sixth aspect of the invention, the evaluation "based on both the first soot concentration value and the second soot concentration value" is preferably made by performing at least one of addition, subtraction, integration, and division.

In addition, according to a seventh aspect of the invention, the high voltage generating unit includes: a switching unit for effecting a switching operation; and a voltage transforming unit which has a low voltage coil inductively coupled to a high voltage coil, the low voltage coil being connected to the switching unit and the high voltage coil being connected to the discharge sensor, the voltage transforming unit, in use, boosting as a result of the switching operation of the switching unit, a low voltage applied to the low voltage coil by a dc power supply to generate the high voltage from the high voltage coil, and wherein the changeover unit converts the predetermined voltage polarity to the opposite voltage polarity by reversing the polarity of the connection of the low voltage coil to the dc power supply such that the voltage polarity of the high voltage to be applied to the pair of electrodes by the voltage transforming unit assumes an opposite voltage polarity to the predetermined voltage polarity.

As a result of this, the high voltage which is applied across the pair of electrodes by the voltage transforming unit can be set to the predetermined voltage polarity or an opposite voltage polarity by the connection changeover unit.

In addition, according to an eighth aspect of the invention, the high voltage generating unit includes: a switching unit for effecting a switching operation; and a voltage transforming unit comprising a low voltage coil inductively coupled to a high voltage coil, the low voltage coil being connected to the switching unit and the high voltage coil being connected to the discharge sensor, the voltage transforming unit, in use, boosting as a result of the switching operation of the switching unit, a low voltage applied to the low voltage coil by a dc power supply to generate the high voltage from the high voltage coil, and wherein the changeover unit reverses the connection of the high voltage coil to the pair of electrodes such that the predetermined voltage polarity of the high voltage to be applied to the pair of electrodes by the voltage transforming unit is changed to the opposite voltage polarity.

Thus, the object of the invention can also be attained by reversing or changing over the connection of the high voltage coil to the pair of electrodes such that the voltage polarity of the high voltage to be applied to the pair of electrodes by the voltage transforming unit assumes the predetermined voltage polarity or an opposite voltage polarity to the predetermined voltage polarity.

In addition, according to a ninth aspect of the invention, there is provided a soot detecting method comprising the steps of: a discharging step of applying a high voltage across a pair of electrodes of a discharge sensor, the pair of electrodes being disposed, in use, in an atmosphere to be detected, so as to cause spark discharge at a voltage dependent upon soot concentration in the atmosphere; a first detection step of detecting a first discharge voltage value when the spark discharge has been caused in the discharge sensor in the discharging step; a first output step of determining a first soot concentration value based on the first discharge voltage value detected in the first detection step; a changeover step of converting a predetermined voltage polarity of the high voltage applied across the pair of electrodes to an opposite voltage polarity to the predetermined voltage polarity; and a reverse discharging step of causing reverse spark discharge at the voltage dependent upon soot concentration in the atmosphere when the high voltage is applied across the pair of electrodes of the discharge sensor.at the opposite voltage polarity.

Since the changeover step and the reverse discharging step are thus provided, it is possible to apply a high voltage of the opposite voltage polarity across the pair of electrodes of the discharge sensor. As a result of this, even if adherents such as soot are adhered to the positive electrode in the case where the electrode is normally used with a predetermined electrode polarity, the electrode is converted to a negative electrode with an opposite polarity, so that adherents can be cleaned appropriately.

Then, since adherents are absent when the electrode is normally used as the positive electrode, the discharge voltage generated between the pair of electrodes becomes extremely stable without being affected by the adherents. As a result, the accuracy of detecting the soot by the soot detecting apparatus can be ensured satisfactorily.

Furthermore, according to a 10th aspect of the invention, in the first output step, the first soot concentration value is preferably outputted based on a plurality of the first discharge voltage values detected in a plurality of the first detection steps. As a result of this, the soot concentration detection accuracy further improves as compared to the case where the first soot concentration value is determined based on a single first discharge voltage value.

Furthermore, according to an 11th aspect of the invention, the reverse discharging step is preferably provided before the discharging step. As a result of this, the adherents on the positive electrode have already been removed at the point of time when the soot is detected in the initial discharging step, so that a stable discharge voltage value can be detected and the soot concentration detection can be ensured with high accuracy.

Furthermore, according to a 12th aspect of the invention, the discharging step and the reverse discharging step are preferably carried out alternately.

Furthermore, according to a 13th aspect of the invention, it is preferred that the discharging step and the reverse discharging step be respectively carried out a plurality of times. As the discharging step and the reverse discharging step are thus respectively carried out a plurality of times, even if the soot concentration detection is performed continuously, the adherents constantly continue to be cleaned and are not adhered to the positive electrode, thereby making it possible to suppress the variation of the result of soot detection. It should be noted that, according to a 14th aspect of the invention, the number of times of the reverse discharging step is preferably greater than or equal to 10% of the number of times of the discharging step.

Furthermore, according to a 15th aspect of the invention, the discharge sensor preferably has an insulator for covering either one of the pair of electrodes and a heater provided on the insulator, and the soot detecting method further comprises the step of: a heater energizing step of combusting soot adhering to the insulator by energizing the heater, wherein the reverse discharging step is carried out after the heater energizing step.

Furthermore, according to a 16th aspect of the invention, the soot detecting method may further comprise the steps of: a second detection step of detecting a second discharge voltage value when the reverse spark discharge has been caused in the discharge sensor in the reverse discharging step; and a second output step of determining a second soot concentration value based on the second discharge voltage value detected in the second detection step. Thus, also in the reverse spark discharge used for cleaning, the spark discharge is generated in the opposite direction to the case of normal use at a second discharge voltage value dependent upon the soot concentration in the atmosphere to be detected. For this reason, by detecting that second discharge voltage value and determining the second soot concentration value based on the second discharge voltage value, it is possible to detect the soot even during cleaning.

Furthermore, according to a 17th aspect of the invention, in the second output step, the second soot concentration value may be outputted on the basis of a plurality of the second discharge voltage values detected in a plurality of the second detection steps. As a result of this, the soot detection accuracy further improves as compared to the case where the second soot concentration value is outputted on the basis of a single second discharge voltage value.

Furthermore, according to an 18th aspect of the invention, the soot detecting method may preferably further comprise: an evaluation step of evaluating a soot concentration based on both the first soot concentration value and the second soot concentration value. As a result of this, the soot detection accuracy further improves as compared to the case where the soot is detected by using only the first soot concentration value and the case where the soot is detected by using only the second soot concentration value. It should be noted that, according to a 19th aspect of the invention, the evaluation "based on both the first soot concentration value and the second soot concentration value" is preferably made by performing at least one of addition, subtraction, integration, and division.

Other features and advantages of the invention will be set forth in, or apparent from, the detailed description of preferred embodiments of the invention found below.

### BRIEF DESCRIPTION OF THE DRAWINGS

Fig. 1 is a functional block diagram of an exemplary soot detecting apparatus in accordance with a first embodiment of the invention;
Fig. 2 is a flowchart of an exemplary method of detecting soot concentration according to the first embodiment of the invention;
Fig. 3 is a flowchart of a reverse spark discharge generating routine in the flowchart shown in Fig. 2;
Fig. 4 is a flowchart of a forward spark discharge generating routine in the flowchart shown in Fig. 2;
Fig. 5 is a graph illustrating a state in which an average value of the discharge voltage of a discharge sensor varies day-by-day depending on the presence or absence of cleaning according to the exemplary method of Fig. 2;
Fig. 6 is a table illustrating a variation of the discharge voltage value of the discharge sensor depending on the presence or absence of cleaning according to the exemplary method of Fig. 2;
Fig. 7 is a bar graph illustrating a relationship between a discharge voltage ratio and a time duration of a reverse spark discharge generating routine of the exemplary method of Fig. 2;
Fig. 8 is a table illustrating a relationship among a forward-reverse spark discharge occurrence frequency ratio, a reverse spark discharge occurrence frequency ratio, and 3σ in a Comparative Example and other Examples in accordance with the exemplary method of Fig. 2;
Fig. 9 is a functional block diagram of another exemplary soot detecting apparatus according to a second embodiment of the invention;
Fig. 10 is a functional block diagram of another exemplary soot detecting apparatus according to a third embodiment of the invention;
Fig. 11 is a flow chart of another exemplary method of detecting soot concentration according to a fourth embodiment of the invention;
Fig. 12 is a functional block diagram of a portion of another exemplary soot detecting apparatus according to a fifth embodiment of the invention;
Fig. 13 is a flowchart of another exemplary method of detecting soot concentration according to the fifth embodiment of the invention; and
Fig. 14 is a flowchart of yet another exemplary method of detecting soot concentration according to a sixth embodiment of the invention.

### DETAILED DESCRIPTION OF EXEMPLARY EMBODIMENTS OF THE INVENTION

Hereafter, referring to the accompanying drawings, a description will be given of the embodiments of the invention.

### First Embodiment

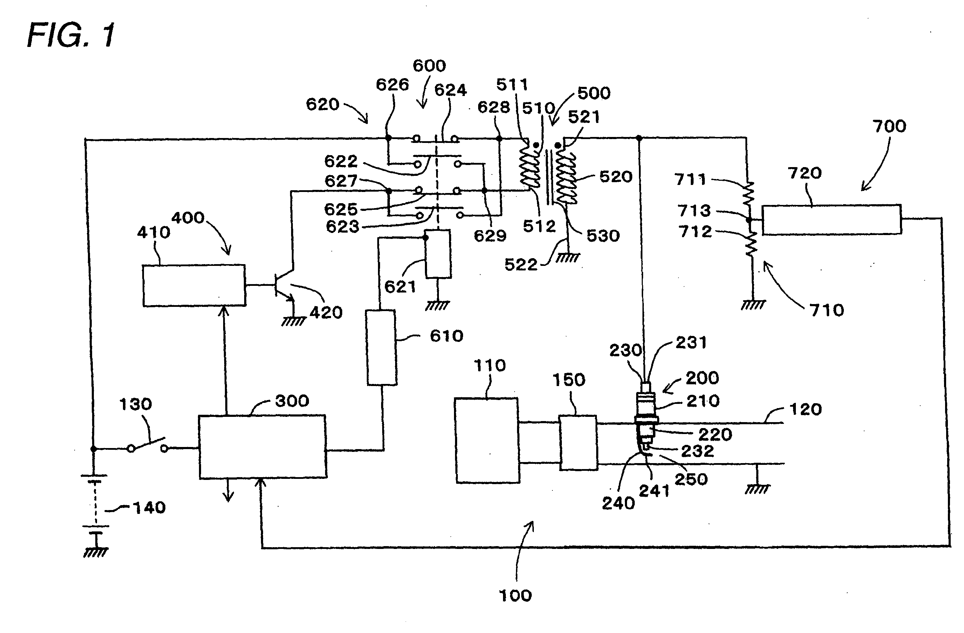

Fig. 1 shows a first embodiment of the soot detecting apparatus in accordance with the invention which is applied to an automotive diesel internal combustion engine 100. The diesel internal combustion engine 100 has an engine body 110 and an exhaust pipe 120 extending from a combustion chamber of this engine body 110. It should be noted that the exhaust pipe 120 is grounded through the vehicle body.

The diesel internal combustion engine 100 is started by the feeding of power from a battery 140 consequent upon the on operation of a starting key switch 130, supplies light oil, i.e., fuel, to the air compressed in the combustion chamber and ignites and combusts it, and discharges exhaust gases from the combustion chamber to the outside through the exhaust pipe 120. It should be noted that a particulate filter 150 (hereafter referred as the DPF 150) is interposed in the exhaust pipe 120, and this DPF 150 traps particulate matter from the exhaust gases flowing through the exhaust pipe 120 and allows the exhaust gases after trapping to flow downstream.

A discharge sensor 200 is inserted in the exhaust pipe 120, and this discharge sensor 200 has an insulator 210, a cylindrical metal shell 220, and a center electrode member 232. The insulator 210 is inserted in the metal shell 220.

Here, the center electrode 232 protrudes from the insulator 210, and its leading end portion (electrode portion) opposes an electrode portion 241 of an outer electrode 240 extending in an L-shape from the metal shell 220. In addition, a terminal member 231, which is connected to the center electrode 232, extends from a base end portion of the insulator 210. It should be noted that an electrode portion of the center electrode 232 together with the electrode portion 241 of the outer electrode 240 constitutes a discharge portion 250 of the discharge sensor 200.

The discharge sensor 200 thus configured is inserted in the exhaust pipe 120 from the outer electrode 240 side, and is supported in the exhaust pipe 120 by the metal shell 220. As such, the discharge sensor 200 causes in the discharge portion 250 spark discharge at a discharge voltage value dependent upon soot or soot concentration in the exhaust gases in the exhaust pipe 120 (the atmosphere to be detected) upon application of a high voltage (which will be described later).

In addition, the soot detecting apparatus has a microcomputer 300, and this microcomputer 300 executes a computer program in accordance with a flowchart referred to later, and effects various arithmetic processing necessary for the cleaning processing of the center electrode 232 of the discharge sensor 200 and the determination and output of the soot concentration value during this execution.

It should be noted that the microcomputer 300 is set in an operable state by the feeding of power from the battery 140 through the starting key switch 130, and starts the execution of the aforementioned computer program consequent upon the on operation of that starting key switch 130. In addition, the computer program is readably stored in advance in a ROM of the microcomputer 300.

A switching circuit 400 (i.e., a switching unit for effecting a switching operation) has a pulse signal generating circuit 410 and a transistor 420. The pulse signal generating circuit 410 sequentially generates a pulse signal in a predetermined period (0.01 sec. in the first embodiment) under control by the microcomputer 300. The transistor 420 at its base receives the pulse signals which are sequentially generated by the pulse signal generating circuit 410, so as to perform switching operation. It should be noted that the emitter of the transistor 420 is grounded. In addition, the predetermined period is not limited to 0.01 sec., and may be in the range of 0.001 to 10 sec.

A high voltage generating circuit 500 (i.e., a high voltage generating unit) consists of an ignition coil (i.e., a voltage transforming unit). This ignition coil has a low voltage coil 510 and a high voltage coil 520 and is formed by winding the low voltage coil 510 and the high voltage coil 520 around an iron core 530 in the same winding direction to inductively couple the low voltage coil 510 to the high voltage coil 520.

As a result, the high voltage generating circuit 500 generates a predetermined high voltage from the high voltage coil 520 by boosting at a predetermined boosting ratio a dc voltage applied to the low voltage coil 510. It should be noted that the predetermined boosting ratio (the number of windings of the high voltage coil 520 / the number of windings of the low voltage coil 510) is a value which is in the range of 500 to 2500. In addition, the high voltage coil 520 is connected at its one terminal 521 to the terminal member 231 of the discharge sensor 200, and the other terminal 522 of that high voltage coil 520 is grounded.

A changeover circuit 600 changes over or converts or reverses a first or predetermined voltage polarity of the dc voltage to be applied to the high voltage generating circuit 500 from the battery 140 to an opposite voltage polarity. The changeover circuit 600, in use, causes a reverse spark discharge at the electrodes 232, 240 of the discharge sensor 200. This changeover circuit 600 has a drive circuit 610 and a relay 620 which is driven by this drive circuit 610.

The relay 620 has a relay coil 621, relay switches 622 and 623, and relay switches 624 and 625. The relay coil 621 is energized or de-energized by the drive circuit 610.

The relay switches 622 and 623 are adapted to interlock with the relay switches 624 and 625. Both of the relay switches 622 and 623 are closed by the energization of the relay coil 621, and are opened by the de-energization of this relay coil 621. Both of the relay switches 624 and 625 are opened by the energization of the relay coil 621, and are closed by the de-energization of this relay coil 621.

Here, the relay switch 622 and the relay switch 624 are connected at their common terminal 626 to a positive terminal of the battery 140. Meanwhile, the relay switch 623 and the relay switch 625 are connected at their common terminal 627 to a collector of the transistor 420.

In addition, the relay switch 623 and the relay switch 624 are connected at their common terminal 628 to one terminal 511 of the low voltage coil 510. Meanwhile, the relay switch 622 and the relay switch 626 are connected at their common terminal 629 to the other terminal 512 of the low voltage coil 510.

An output processing circuit 700 has a potential divider 710 and a peak hold circuit 720, and the potential divider 710 is constituted by both resistors 711 and 712 connected to each other in series. As such, the potential divider 710 divides the high voltage from the high voltage coil 520 of the high voltage generating circuit 500 at a predetermined dividing ratio, and generates a divided voltage from a common terminal 713 of the both resistors 711 and 712. Here, the aforementioned predetermined dividing ratio represents a predetermined resistance value ratio (a resistance value of the resistor 711 / a resistance value of the resistor 712, which is 0.001 in the first embodiment).

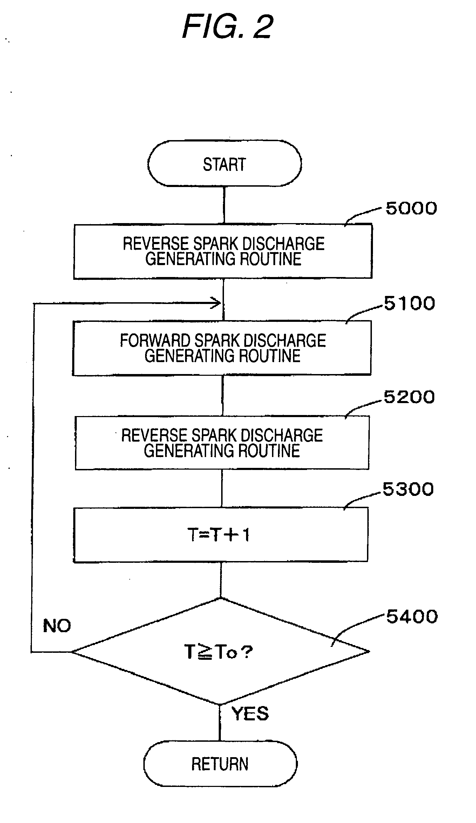

Next, a description will be given of a flowchart shown in Fig. 2. The microcomputer 300 shown in Fig. 1 executes a computer program in accordance with the flowchart in Fig. 2, and effects various arithmetic processing necessary for the cleaning processing of the discharge sensor 200 and the output of a first soot concentration value during this execution.

First, when the microcomputer 300 is operated consequent upon the on operation of the starting key switch 130, the microcomputer 300 executes a reverse spark discharge generating routine 5000.

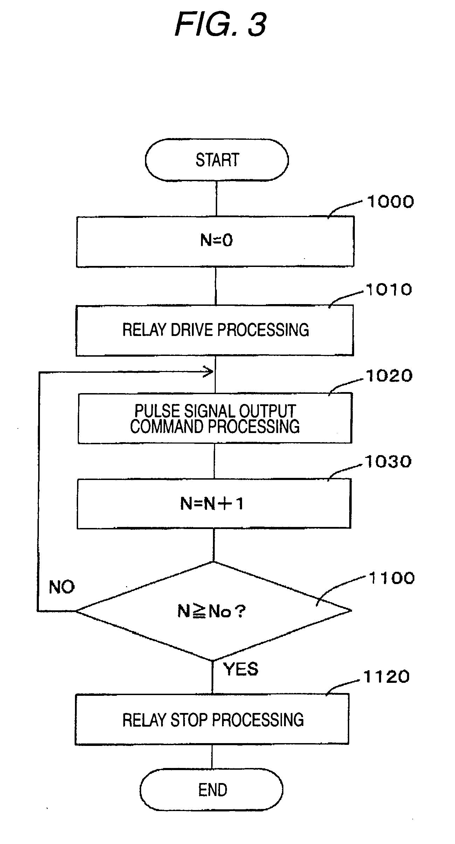

This reverse spark discharge generating routine 5000 consists of Step 1000 to Step 1120 in the flowchart in Fig. 3.

First, in Step 1000, count data N is cleared (N = 0).

Next, in Step 1010, relay drive processing is performed. In conjunction with this, in the changeover circuit 600, the relay coil 621 is energized by the drive circuit 610 to close both the relay switches 622 and 623 and open the relay switches 624 and 625.

For this reason, in the high voltage generating circuit 500, the low voltage coil 510 is connected at its one terminal 511 to the collector of the transistor 420 through the relay switch 623, and is connected at its other terminal 512 to the positive terminal of the battery 140 through the relay switch 622.

After the processing of Step 1010, pulse signal output command processing is performed in Step 1020. Here, on the basis of a pulse signal output command from the microcomputer 300, the pulse signal generating circuit 410 sequentially generates a pulse signal in a predetermined period and outputs it to the base of the transistor 420. Then, on the basis of each pulse signal sequentially outputted from the pulse signal generating circuit 410, this transistor 420 repeats switching operation (alternate operation of conduction and non-conduction) in a predetermined period.

According to such switching operation of the transistor 420, each time the transistor 420 conducts, the high voltage generating circuit 500 is grounded at the one terminal 511 of the low voltage coil 510 through the transistor 420 in a state in which the other terminal 512 of the low voltage coil 510 is connected to the positive terminal of the battery 140.

For this reason, in the high voltage generating circuit 500, a dc voltage (e.g., 12 V) is applied from the battery 140 to the low voltage coil 510 with its one terminal 511 set as the negative side and its other terminal 512 set as the positive side, and a high voltage is generated from the high voltage coil 520 with its one terminal 521 set as the negative side and its other terminal 522 as the positive side. Accordingly, this high voltage is applied to the discharge sensor 200 so as to set its center electrode 232 set as the negative side and its outer electrode 240 as the positive side. As a result of this, the discharge sensor 200 causes spark discharge in the discharge portion 250 to effect the cleaning processing of the center electrode 232. It should be noted that, in the first embodiment, the spark discharge in which the center electrode 232 of the discharge sensor 200 is set as the negative side and the outer electrode 240 as the positive side is referred to as the reverse spark discharge.

Next, in Step 1030, the count data N is incremented by "1' each time (N = N + 1). Accordingly, this count data N corresponds to the number of occurrence of the pulse signal of the pulse signal generating circuit 410.

Next, in Step 1030, a determination is made as to whether or not the most recent count data N is greater than or equal to a predetermined threshold No. If the most recent count data N is less than the predetermined threshold No, NO is given in the determination, and feedback is given to Step 1020. Meanwhile, if the most recent count data N is greater than or equal to the predetermined threshold No, YES is given in the determination, and the operation proceeds to Step 1120. It should be noted that, in the first embodiment, the predetermined threshold No is set to, for example "100."

Next, in Step 1120, relay stop processing is performed. For this reason, in the relay 620, the relay coil 621 is de-energized by the drive circuit 610 to open both the relay switches 622 and 623 and close the relay switches 624 and 625.

Accordingly, in the high voltage generating circuit 500, the low voltage coil 510 is connected at its one terminal 511 to the positive terminal of the battery 140 through the relay switch 624, and is connected at its other terminal 512 to the collector of the transistor 420 through the relay switch 625.

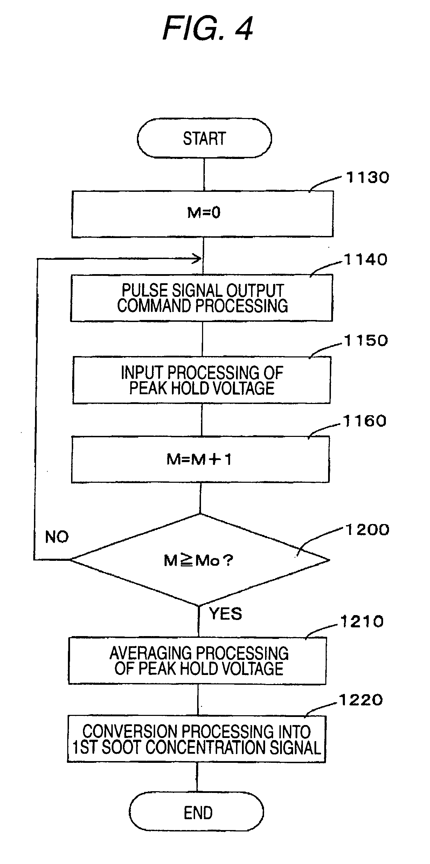

Then, when Step 1120 is completed, the execution of the reverse spark discharge generating routine 5000 is terminated, and the microcomputer 300 executes a forward spark discharge generating routine 5100 for the sensor, as shown in Fig. 2. This forward spark discharge generating routine 5100 consists of Step 1130 to Step 1230 in the flowchart in Fig. 4. First, in Step 1130, count data M is cleared (M = 0). Next, in Step 1140, pulse signal output command processing is performed. For this reason, the pulse signal generating circuit 410 sequentially generates pulse signals, and the transistor 420 repeats switching operation in response to these pulse signals.

According to such switching operation of the transistor 420, each time the transistor 420 conducts, the high voltage generating circuit 500 is grounded at the other terminal 512 of the low voltage coil 510 through the transistor 420 in a state in which the one terminal 511 of the low voltage coil 510 is connected to the positive terminal of the battery 140.

For this reason, in the high voltage generating circuit 500, a dc voltage is applied from the battery 140 to the low voltage coil 510 with its one terminal 511 set as the positive side and its other terminal 512 set as the negative side, and a predetermined high voltage is generated from the high voltage coil 520 with its one terminal 521 set as the positive side and its other terminal 522 as the negative side. Accordingly, this predetermined high voltage is applied to the discharge sensor 200 so as to set its center electrode 232 set as the positive side and its outer electrode 240 as the negative side.

As a result of this, the discharge sensor 200 discharges in the discharge portion 250 and generates a discharge voltage. It should be noted that, in the first embodiment, the spark discharge in which the center electrode 232 of the discharge sensor 200 is set as the positive side and the outer electrode 240 as the negative side is referred to as the forward spark discharge. Here, since the center electrode 232 of the discharge sensor 200 has already been subjected to cleaning processing by the reverse spark discharge, there are no adherents on that center electrode 232. For this reason, the discharge voltage value of the discharge sensor 200 can be maintained very stably.

When the discharge sensor 200 generates the discharge voltage in the above-described manner, this discharge voltage is divided by the potential divider 710, and the divided voltage is outputted to the peak hold circuit 720. For this reason, this peak hold circuit 720 holds the divided voltage at its peak level, generates it as the peak hold voltage, and inputs it to the microcomputer 300 in the input processing of the peak hold voltage in Step 1150.

After the processing in Step 1150, in Step 1160, the count data M is incremented by "1' each time (M = M + 1). Accordingly, this count data M corresponds to the number of occurrence of the pulse signal of the pulse signal generating circuit 410.

Next, in Step 1160, a determination is made as to whether or not the most recent count data M is greater than or equal to a predetermined threshold Mo. If the most recent count data M is less than the predetermined threshold Mo, NO is given in the determination, and feedback is given to Step 1140. Meanwhile, if the most recent count data M in Step 1160 is greater than or equal to the predetermined threshold Mo, YES is given in the determination, and the operation proceeds to Step 1210. In this embodiment, the predetermined threshold Mo is set to, for example "100."

Next, in Step 1210, averaging processing of the peak hold voltage is performed. Here, all the peak hold voltages which have already been inputted in Step 1150 are averaged by the arithmetic mean, which is obtained as an average value.

Then, in Step 1220, conversion processing into or the determination of a soot concentration (hereafter also referred to as a first soot concentration value or signal) is carried out. In this conversion processing, the average value of the peak hold voltages obtained in Step 1210 is converted into the first soot concentration value corresponding thereto and is outputted from the microcomputer 300.

Upon completion of Step 1220, the execution of the forward spark discharge generating routine 5100 is terminated. Thus, since the first soot concentration value is generated in the forward spark discharge generating routine 5100 in the state in which the center electrode 232 of the discharge sensor 200 has been provided with cleaning processing by the execution of the reverse spark discharge generating routine 5000, the first soot concentration value can be obtained with high accuracy on the basis of the discharge voltage generated from the discharge sensor 200.

In addition, since the threshold of the most recent count data M is set to 100 and the first soot concentration value is outputted on the basis of the average value of a plurality of peak hold voltages, the soot detection accuracy becomes higher as compared to a case where the first soot concentration value is outputted on the basis of one peak hold voltages.

Next, when the execution of the forward spark discharge generating routine 5100 for the sensor is completed, the microcomputer 300 executes a reverse spark discharge generating routine 5200 again, as shown in Fig. 2. Since this reverse spark discharge generating routine 5200 is configured in the same way as the above-described reverse spark discharge generating routine 5000, a description will be omitted, and the center electrode 232 is subjected to cleaning processing until the count data N becomes such that N = No = 100.

Then, when the execution of the reverse spark discharge generating routine 5200 for the sensor is completed, in Step 5300, count data T is incremented by "1' each time (T = T + 1). Accordingly, this count data T corresponds to the number of occurrence of the forward spark discharge generating routine 5100.

Next, in Step 5460, a determination is made as to whether or not the most recent count data T is greater than or equal to a predetermined threshold To. If the most recent count data T is less than the predetermined threshold To, NO is given in the determination, and feedback is given to the forward spark discharge generating routine 5100. In this embodiment, the predetermined threshold To is set to, for example "100."

Subsequently, the forward spark discharge generating routine 5100 and the reverse spark discharge generating routine 5200 are alternately executed until YES is given in the determination in Step 5400. As a result of this, the first soot concentration value can be detected continuously. Moreover, even if the first soot concentration value is detected continuously, the first soot concentration value can be obtained with high accuracy for a long time period on the basis of the stable discharge voltage value since the center electrode 232 is subjected to cleaning processing by the reverse spark discharge without incurring the adherence of new adherents on the center electrode 232. It should be noted that when the answer in the determination in Step 5400 turns to YES, the aforementioned computer program returns to a start step from a return step.

It should be noted that the transistor 420 in the first embodiment corresponds to the "switching unit" in the claims; the high voltage generating circuit 500 corresponds to the "voltage transforming unit"; the transistor 420 and the high voltage generating circuit 500 correspond to the "high voltage generating unit"; the changeover circuit 600 corresponds to the "changeover unit" or the "connection changeover unit"; the output processing circuit 700 corresponds to the "first detection unit"; and the microcomputer 300 corresponds to the "first output unit."

In addition, Step 1020 in the first embodiment corresponds to the "reverse discharging step" in the claims; Steps 1010 and 1120 correspond to the "changeover step"; Step 1140 corresponds to the "discharging step"; Step 1150 corresponds to the "first detection step"; and Steps 1210 and 1220 correspond to the "first output step."

Next, to confirm the effect of the reverse spark discharge, a measurement was made as to how the average value of the discharge voltages varied under the following processing cycle conditions when the discharge sensor 200 was used for 10 days.

After, on each day, the discharge sensor 200 was exposed to exhaust gases in the exhaust pipe 120 for 30 minutes, the discharge sensor 200 was mounted in a model pipe (not shown), and a measurement test was carried out under processing cycle conditions described below. It should be noted that the gas temperature of the gases in the model pipe was set to 100°C, and the composition of the gases in the model pipe consisted of 10% hydrogen (O₂), 5% carbon dioxide (CO₂), 5% water (H₂O), and nitrogen (N₂).

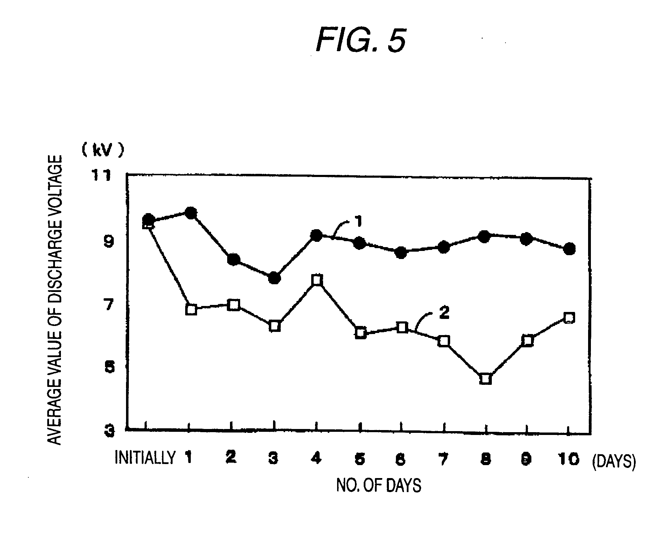

Fig. 5 shows representative data for the following conditions plotted versus time:
1. Processing cycle condition for each day in a case where the discharge voltage value is measured without providing cleaning processing: In this processing cycle condition, the discharge sensor 200 is made to effect forward spark discharge 100 times, and an average value of the peak hold voltages is calculated.
2. Processing cycle condition for each day in a case where the discharge voltage value is measured by providing cleaning processing: In this processing cycle condition, the discharge sensor 200 is first made to effect reverse spark discharge 100 times to carry out the cleaning processing of the center electrode 232. Subsequently, the discharge sensor 200 is made to effect forward spark discharge 100 times, and an average value of the peak hold voltages is calculated.

The results of the respective measurements for 10 days are respectively plotted as data set 1 and data set 2 in Fig. 5. Data set 1 in Fig. 5 shows the discharge voltage value resulting from the above-described processing cycle 2. Further, data set 2 shows the discharge voltage value resulting from the above-described processing cycle 1. As seen by examining data set 1 and data set 2, it can be appreciated that, in the case of the processing cycle 2, the average value of the discharge voltages is more stable with smaller variations as compared to the processing cycle 1.

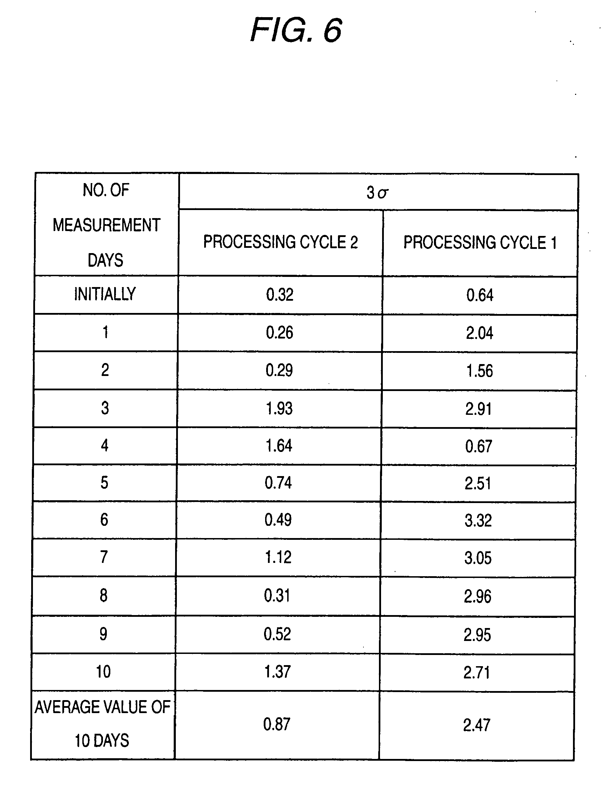

In addition, an examination was conducted as to the variations of the discharge voltage of the discharge sensor 200 for each day. As a result, the data shown in the table of Fig. 6 was obtained. In this table, 3σ is a value obtained with respect to 100 discharge voltages for each day. According to this table, it can be appreciated that the variation of the discharge voltage value in the processing cycle 2 is considerably small as compared to the variation of the discharge voltage value in the processing cycle 1. From the above-described results, it can be understood that the cleaning processing of the center electrode 232 due to the reverse spark discharge is extremely effective in maintaining the variation of the discharge voltage value to small and stable values.

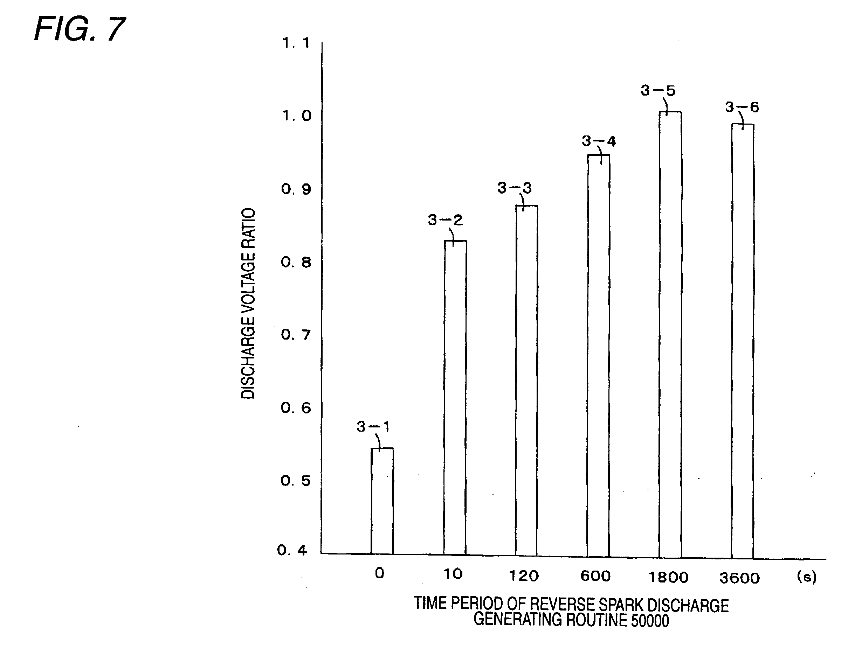

Further, a test was conducted to examine how the relationship between a discharge voltage ratio (= discharge voltage after 1 hr. discharge /initial discharge voltage) and the period of the reverse spark discharge generating routine 5000 for the discharge sensor 200 varied under discharge atmosphere conditions and a discharge voltage detection condition described below. As a result, bar graphs 3-1 to 3-6 shown in Fig. 7 were obtained. It should be noted that the closer to "1.0" the discharge voltage ratio is, the higher the stability of the discharge voltage is.

It should be noted that the aforementioned term "discharge voltage after 1 hr. discharge" refers to the discharge voltage value of the discharge sensor 200 when, after execution of the reverse spark discharge generating routine 5000 for a time duration mentioned below, the discharge sensor 200 is made to cause forward spark discharge for 1 hour in the atmosphere of a model gas. In addition, the aforementioned term "initial discharge voltage" refers to the discharge voltage value of the discharge sensor 200 immediately after execution of the reverse spark discharge generating routine 5000 for a time duration mentioned below.

In addition, as for the aforementioned discharge atmosphere conditions, the gas temperature was set to 100°C, and the composition of the gases in the model pipe consisted of 10% hydrogen (O₂), 5% carbon dioxide (CO₂), 5% water (H₂O), and nitrogen (N₂). In addition, the aforementioned discharge voltage detection condition is set to the case of a soot concentration of 0 (mg/m³).

In Fig. 7, the bar graph 3-1 shows the discharge voltage ratio when the time duration of the reverse spark discharge generating routine 5000 was 0 sec. , and the bar graphs 3-2, 3-3, 3-4, 3-5, and 3-6 show the discharge voltage ratio when the time duration of the reverse spark discharge generating routine 5000 was set to 10 sec., 120 sec. , 600 sec., 1800 sec., and 3600 sec. , respectively.

In the bar graph 3-1 in Fig. 7, the discharge voltage ratio is 0.55 or thereabouts, whereas, in the bar graphs 3-2 to 3-6, the discharge voltage ratio is a value exceeding 0.8 and is close to 1.0, and it can be understood that the stability of the discharge voltage value of the discharge sensor 200 is excellent.

According to the above, it can be appreciated that the discharge voltage ratio can be maintained at a high level by performing reverse spark discharge in the discharge sensor 200 in the reverse spark discharge generating routine 5000, with the result that stable detection of the soot concentration becomes possible. It should be noted that the time duration of the reverse spark discharge generating routine 5000 should preferably be less than 30 min. If the time duration of the reverse spark discharge generating routine 5000 is longer than 30 min., the cleaning time of the center electrode 232 becomes excessively long, with the result that wear occurs to the center electrode 232 and the durability of the discharge sensor 200 declines.

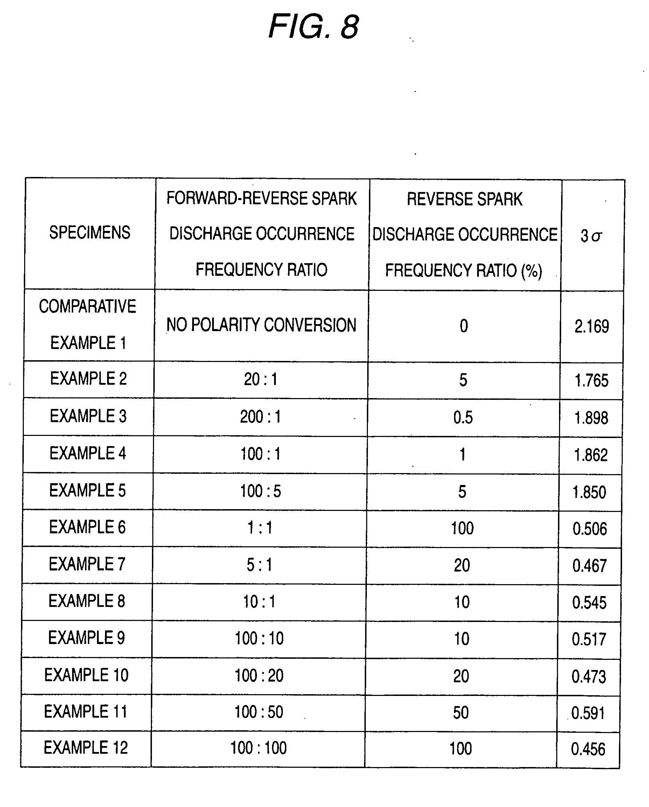

Next, an evaluation was made as to what effect the ratio between the frequency of occurrence of forward spark discharge and the frequency of occurrence of reverse spark discharge (hereafter referred to as the forward-reverse spark discharge occurrence frequency ratio) exerts on the discharge voltage value. First, 12 discharge sensors 200 were prepared in Comparative Example 1 and Examples 2 to 12. It should be noted that, in the table of Fig. 8, a forward-reverse spark discharge occurrence frequency ratio of 20 : 1 in Example 2, for instance, refers to a ratio between a forward spark discharge occurrence frequency of 20 (threshold Mo = 20) and a reverse spark discharge occurrence frequency of 1 (threshold No = 1). In addition, the reverse spark discharge occurrence frequency ratio shows in percentage the ratio of the reverse spark discharge occurrence ratio to the forward spark discharge occurrence ratio, and the forward-reverse spark discharge occurrence frequency ratio of 20 : 1 in Example 2, for instance, is the reverse spark discharge occurrence frequency ratio of 5%.

Then, an examination was made as to how the discharge voltage value during the forward spark discharge varied by respectively energizing the discharge sensors 200 of Comparative Example 1 and Examples 2 to 12 under the discharge atmosphere condition shown in Fig. 7 for 20 min. It should be noted that the value of the threshold To is set to a frequency corresponding to 20 min. with respect to each of Comparative Example 1 and Examples 2 to 12. The variation of this discharge voltage value is shown by "3σ" which is the variation of the discharge voltage value in Comparative Example 1 and Examples 2 to 12 by the energization for 20 min.

According to the above, in the case where the reverse spark discharge is not effected as in Comparative Example 1, 3σ was 2.169, whereas, in Examples 2 to 5, 3σ was 1.765, 1.898, 1.862, and 1.850, respectively (see the table in Fig. 8). Accordingly, it can be appreciated that the variation of the discharge voltage value in Examples 2 to 5 is small as compared with Comparative Example 1.

Furthermore, in Examples 6 to 12, 3σ was 0.506, 0.467, 0. 545, 0. 517, 0. 473, 0. 591, and 0. 456, and it can be appreciated that the variation of the discharge voltage value becomes considerably small. Namely, if the reverse spark discharge occurrence frequency ratio is set to 10% or greater as in shown in Examples 6 to 12, even if the detection of the soot concentration is effected continuously for a long time (e.g., 20 min.), soot and other matter in the atmosphere to be detected and particles which are sputtered from the negative electrode 240 constantly continue to be cleaned and do not adhere to the center electrode 232. For this reason, the variation of the discharge voltage value can be minimized, with the result that it can be appreciated that the soot concentration can be determined stably.

### Second Embodiment

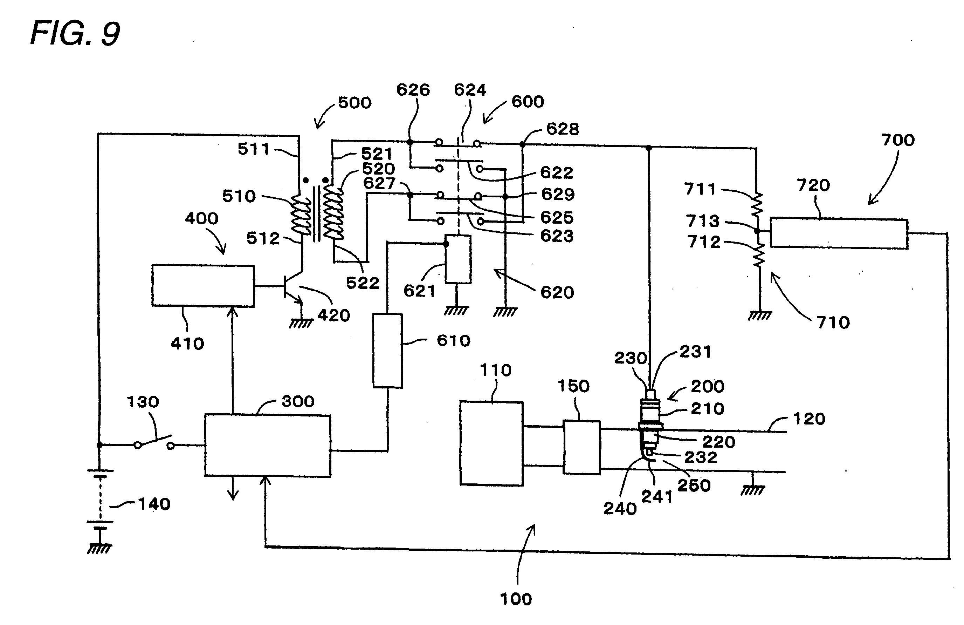

Fig. 9 shows a second embodiment of the invention. In this second embodiment, the relay 620 referred to in the above-described first embodiment differs from the first embodiment, and is interposed between, on the one hand, the high voltage generating circuit 500 and, on the other hand, the discharge sensor 200 and the output processing circuit 700.

Namely, in this second embodiment, in the relay 620, the relay switch 622 and the relay switch 624 are connected at their common terminal 626 to the one terminal 521 of the high voltage coil 520 of the high voltage generating circuit 500. Meanwhile, the relay switch 623 and the relay switch 625 are connected at their common terminal 627 to the other terminal 522 of the high voltage coil 520.

In addition, the relay switch 623 and the relay switch 624 are connected at their common terminal 628 to the terminal member 231 of the discharge sensor 200 and are grounded through the potential divider 710. Further, the relay switch 622 and the normally closed relay switch 625 are grounded at their common terminal 629. It should be noted that the low voltage coil 510 of the high voltage generating circuit 500 is connected at its one terminal 511 to the positive terminal of the battery 140, and the other terminal 512 of the low voltage coil 510 is connected to the collector of the transistor 420.

According to the changeover circuit 600 thus configured, when the relay 620 grounded the one terminal 521 of the high voltage coil 520 through the relay switch 622 and connected the other terminal 522 of the high voltage coil 520 to the terminal member 231 of the discharge sensor 200, the relay 620 applies the high voltage, which is generated from the high voltage coil 520, across the center electrode 232 and the outer electrode 240 of the discharge sensor 200 by setting the common terminal 628 as the negative side and the common terminal 629 as the positive side on the basis of the conduction of the transistor 420.

In addition, when the relay 620 grounded the other terminal 522 of the high voltage coil 520 through the relay switch 625 and connected the one terminal 521 of the high voltage coil 520 to the terminal member 231 of the discharge sensor 200, the relay 620 applies the high voltage, which is generated from the high voltage coil 520, across the center electrode 232 and the outer electrode 240 of the discharge sensor 200 by setting the common terminal 628 as the positive side and the common terminal 629 as the negative side on the basis of the conduction of the transistor 420.

It should be noted that the other configurations are similar to those of the above-described first embodiment, and a description thereof will be omitted. In addition, the computer program of the microcomputer 300 is also similar to that of the first embodiment, and a description thereof will be omitted in the second embodiment.

### Third Embodiment

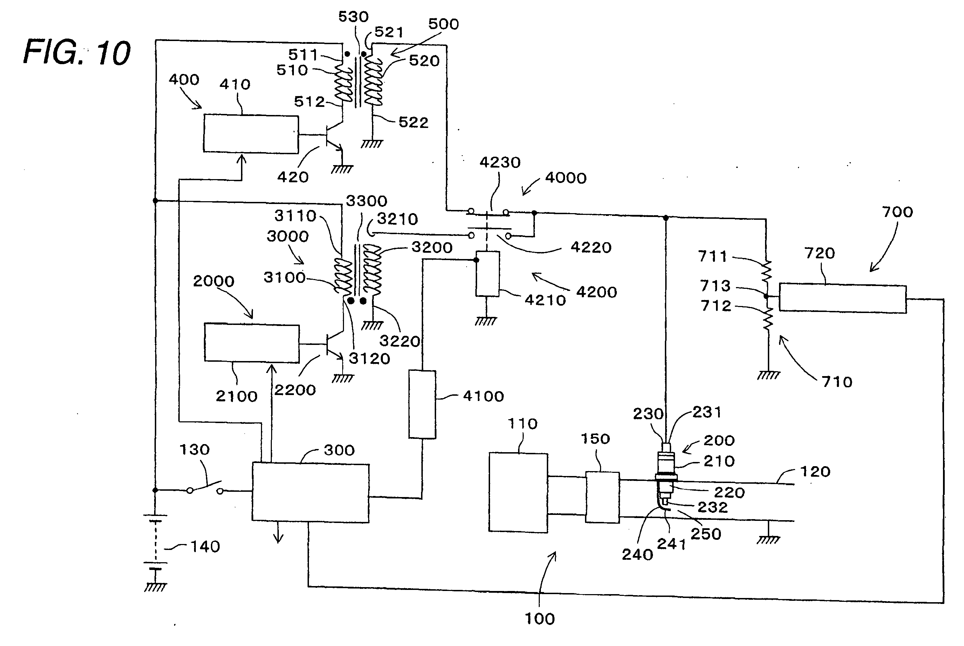

Fig. 10 shows a third embodiment of the invention. In this third embodiment, in the configuration of the second embodiment, a switching circuit 2000 and a high voltage generating circuit 3000 are further adopted, and a changeover circuit 4000 is adopted in substitution for the changeover circuit 600 referred to in the above-described second embodiment. It should be noted that, in the third embodiment, the forms of the ignition coil of the high voltage generating circuit 3000 and the changeover circuit 4000 differ from those of the second embodiment, and a description of the other portions will be omitted or simplified.

The high voltage generating circuit 3000 is constituted by an ignition coil, and this ignition coil is formed by winding a low voltage coil 3100 and a high voltage coil 3200 around an iron core 3300 in the same winding direction. Both winding directions of the low voltage coil 3100 and the high voltage coil 3200 around the iron core 3300 in this ignition coil are opposite directions to the winding directions of the low voltage coil 510 and the high voltage coil 520 around the iron core 530 in the ignition coil, i.e., the high voltage generating circuit 500.

In the high voltage generating circuit 3000 thus configured, the low voltage coil 3100 is connected at its one terminal 3110 to the positive terminal of the battery 140, and the other terminal 3120 of this low voltage coil 3100 is connected to the collector of a transistor 3200. In addition, the high voltage coil 3200 is connected at its one terminal 3210 to the rod 231 of the discharge sensor 200 through a normally open relay switch 4220 of a relay 4200 (which will be described later), and the other terminal 3220 of this high voltage coil 3200 is grounded.

The voltage polarity changeover circuit 4000 changes over the voltage polarity of the dc voltage to be applied to the discharge sensor 200 by effecting a changeover and selecting a high voltage from either one of the both high voltage generating circuits 500 and 3000. This voltage polarity changeover circuit 4000 has a drive circuit 4100 and the relay 4200 which is driven by this drive circuit 4100.

The relay 4200 has a relay coil 4210, the relay switch 4220, and a relay switch 4230. The relay coil 4210 is energized or de-energized by the drive circuit 4100.

The relay switch 4220 is closed by the energization of the relay coil 4210, and is opened by the de-energization of this relay coil 4210. The relay switch 4230 is opened by the energization of the relay coil 4210, and is closed by the de-energization of this relay coil 4210.

Here, the both relay switches 4220 and 4230 are connected at their common terminal 4240 to the terminal member 231 of the discharge sensor 200. As a result, the relay switch 4220, upon being closed, connects the one terminal 3210 of the high voltage coil 3200 to the rod 231 of the discharge sensor 200, and the relay switch 4220, upon being closed, shuts off the terminal member 231 of the discharge sensor 200 from the one terminal 3210 of the high voltage coil 3200.

In addition, the relay switch 4230, upon being closed, connects the one terminal 521 of the high voltage coil 520 to the terminal member 231 of the discharge sensor 200, and the relay switch 4230, upon being closed, shuts off the terminal member 231 of the discharge sensor 200 from the one terminal 521 of the high voltage coil 520.

Furthermore, in this third embodiment, also in the computer program of the microcomputer 300, only Step 1010 and Step 1120 differ from those of the second embodiment, and a description of the other steps will be omitted.

In this third embodiment, when the operation proceeds to relay drive processing in Step 1010, the relay coil 4210 is energized by the drive circuit 4100 to close the relay switch 4220 and open the relay switch 4230.

In addition, in relay stop processing in Step 1120, the relay coil 4210 is de-energized by the drive circuit 4100 to open the relay switch 4220 and close the relay switch 4230.

### Fourth Embodiment

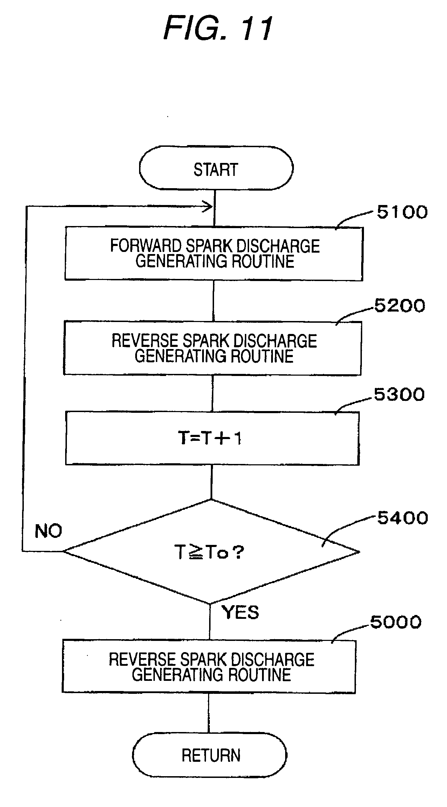

Fig. 11 shows essential portions of a fourth embodiment of the invention. In this fourth embodiment, unlike the flowchart (see Fig. 2) referred to in the above-described first embodiment, the reverse spark discharge generating routine 50000 is inserted not between the start step and the forward spark discharge generating routine 5100 but between Step 5300 and the return step. Further, in this reverse spark discharge generating routine 5000, the threshold No is set to "1000" unlike the first embodiment. It should be noted that the threshold No of the reverse spark discharge generating routine 5200 is set to "100" in the same way as in the first embodiment. The other configurations are similar to those of the first embodiment.

In the fourth embodiment thus configured, after the forward spark discharge generating routine 5100 and the reverse spark discharge generating routine 5200 are alternately repeated, the reverse spark discharge generating routine 5000 is finally carried out to perform further cleaning processing of the center electrode 232. Furthermore, in this reverse spark discharge generating routine 5000, since a threshold larger than the threshold of the reverse spark discharge generating routine 5200 is set, processing can be provided such that adherents do not practically adhere to the center electrode 232 by virtue of the cleaning processing.

### Fifth Embodiment

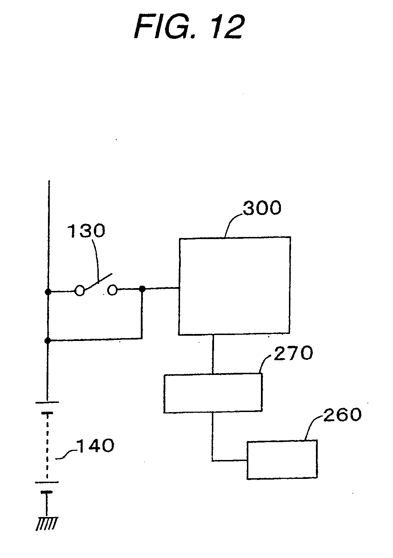

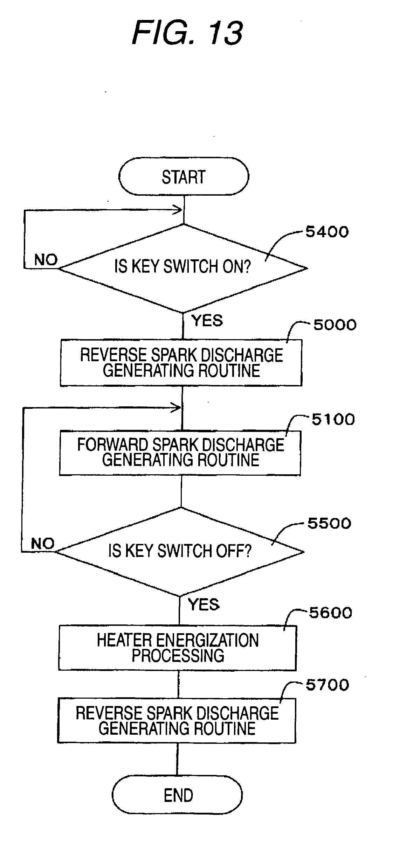

Figs. 12 and 13 show essential portions of a fifth embodiment of the invention. In this fifth embodiment, unlike the first embodiment, the microcomputer 300 is not only connected to the positive terminal of the battery 140 through the starting key switch 130 , but is directly connected to the positive terminal of the battery 140, as shown in Fig. 12. In conjunction with this, the microcomputer 300 is not set in the operable state by the on operation of the starting key switch 130, but is set in the operable state immediately when the microcomputer 300 is directly connected to the positive terminal of the battery 140.

In addition, in this fifth embodiment, unlike the first embodiment, a heater 260 is connected to the microcomputer 300 through a drive circuit 270, as shown in Fig. 12. The heater 260 is provided on a leading end portion of the insulator 210, and this heater 260 is driven and energized by the drive circuit 270 under control by the microcomputer 30 so as to heat the insulator 210.

In addition, in this fifth embodiment, a flowchart shown in Fig. 13 is adopted. The other configurations are similar to those of the above-described first embodiment and a detailed description thereof will be omitted.

A description will be given of the flowchart in this Fig. 13. It should be noted that the reverse spark discharge generating routine 5000 and the forward spark discharge generating routine 5100 are similar to those of the first embodiment, and are executed by using the flowcharts of Figs. 3 and 4, so that a description thereof will be omitted. In addition, since a reverse spark discharge generating routine 5700 is also executed by using the flowchart in Fig. 3, a description thereof will be omitted.

First, in Step 5400, a determination is made as to whether or not the starting key switch 130 is in an on state. If the starting key switch 130 is in an off state, NO is given in the determination in Step 5400.

When the microcomputer 300 gives a YES determination on the basis of the on state of the starting key switch 130 with the starting of the diesel internal combustion engine 100 in conjunction with the on operation of the starting key switch 130, the reverse spark discharge generating routine 5000 is executed to effect the cleaning processing of the center electrode 232.

Next, the forward spark discharge generating routine 5100 is executed, and the first soot concentration value is obtained with high accuracy on the basis of the stable discharge voltage value from the discharge sensor 200. Subsequently, in Step 5500, a determination is made as to whether or not the starting key switch 130 is off.

If the starting key switch 130 is in the on state, NO is given in the determination in Step 5500, and feedback is given to the forward spark discharge generating routine 5100. Subsequently, the processing of the forward spark discharge generating routine 5100 and Step 5500 is repeated until the starting key switch 130 assumes the off state.

On the other hand, with the off operation of the starting key switch 130, the diesel internal combustion engine 100 is stopped, and the microcomputer 300 gives a YES determination on the basis of the off state of the starting key switch 130 in Step 5500.

Then, the heater 260 is driven and energized by the drive circuit 270 in heater energization processing in Step 5600. For this reason, the heater 260 removes the soot adhering to the insulator 210 by heating the insulator 210. It should be noted that since the energization of the heater 260 is started by the drive circuit 270 within 100 sec. after the stopping of the diesel internal combustion engine 100, the energization of the heater 260 is effected in a state in which the exhaust pipe 120 is still warm after the stopping of the diesel internal combustion engine 100.

Next, upon completion of processing in Step 5600, the reverse spark discharge generating routine 5700 is executed, and the center electrode 232 is subjected to cleaning processing, whereupon the operation ends.

Thus, by carrying out the reverse spark discharge generating routine after the heater energization processing, the adherence of adherents such as soot on the discharge sensor is further eliminated. During the next detection of soot, the first soot concentration value can be detected with high accuracy at a stable discharge voltage value.

### Sixth Embodiment

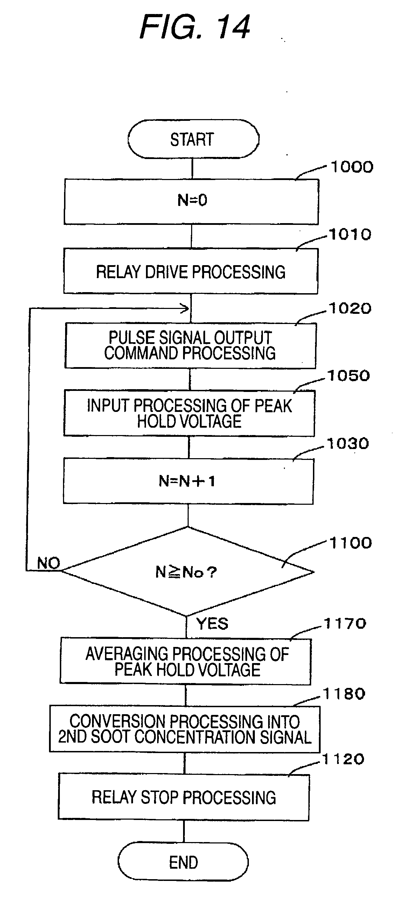

Fig. 14 shows essential portions of a sixth embodiment of the invention. In this sixth embodiment, the reverse spark discharge generating routine in Fig. 3 referred to in the above-described first embodiment differs, and the other configurations are similar to those of the first embodiment. Accordingly, a description will be given of only the flowchart shown in Fig. 14, and a description of the other portions will be omitted.

In the flowchart shown in Fig. 14, in comparison with the flowchart in Fig. 3 illustrating the reverse spark discharge generating routine, peak hold voltage input processing, which constitutes Step 1050, is effected between Step 1020 and Step 1030. In addition, peak hold voltage averaging processing, which constitutes Step 1170, as well as conversion processing into, or determination of, a second soot concentration value or signal, which constitutes Step 1180, are effected between Step 1100 and Step 1120.

In Step 1050, the discharge voltage value at the time when the discharge sensor 200 effected reverse spark discharge is divided by the potential divider 710, and the divided voltage is outputted from the common terminal 713 to the peak hold circuit 720. For this reason, this peak hold circuit 720 holds the divided voltage at its peak level, generates it as the peak hold voltage, and inputs it to the microcomputer 300 in the input processing of the peak hold voltage in Step 1050.

Then, in Step 1170, averaging processing of the peak hold voltage is performed. Here, all the peak hold voltages which have already been inputted in Step 1050 are averaged by the arithmetic mean, which is obtained as an average value.

Then, in Step 1180, conversion processing into, or determination of, the second soot concentration value is carried out. In this conversion processing, the average value of the peak hold voltages obtained in Step 1170 is converted into the second soot concentration value corresponding thereto and is outputted from the microcomputer 300.

Thus, as the microcomputer 300 executes the flowchart shown in Fig. 14, also in the reverse spark discharge used for cleaning processing, the second discharge voltage value during the reverse spark discharge is detected, and the second soot concentration value is determined and outputted on the basis of the second discharge voltage value, thereby making it possible to detect the soot.

It should be noted that as an evaluation circuit is provided so as to be connected to the microcomputer 300 of the soot detecting apparatus shown in Fig. 1, it is possible to perform an evaluation based on the first soot concentration value and the second soot concentration value which are outputted from the microcomputer 300. As a result, the soot detection accuracy further improves as compared to the case where the soot is detected by using only the first soot concentration value and the case where the soot is detected by using only the second soot concentration value. It should be noted that, in the evaluation circuit, an evaluation is made by using at least one of addition, subtraction, integration, and division.

In addition, processing can also be provided within the microcomputer 300 without using the above-described evaluation circuit. In this case, the first soot concentration value and the second soot concentration value which are alternately processed may be respectively stored, and an evaluation may be made on the basis of both signals.

It should be noted that the invention in its implementation is not limited to the above-described various embodiments, and it is possible to cite the following various modifications.
(1) In the first to third embodiments, the reverse spark discharge generating routine 5200 in the computer program in Fig. 2 may not be executed. Namely, after the reverse spark discharge generating routine 5000 is carried out once, the forward spark discharge generating routine 5200 can be carried out a predetermined number of times. By so doing, since the first soot concentration value is generated in the forward spark discharge generating routine 5100 in the state in which the center electrode 232 of the discharge sensor 200 has been provided with cleaning processing by the execution of the reverse spark discharge generating routine 5000, the first soot concentration value can be obtained with high accuracy on the basis of the discharge voltage value generated from the discharge sensor 200.
(2) In addition, in the fifth embodiment, the reverse spark discharge generating routine may be carried out between the forward spark discharge generating routine 5100 and Step 5500. By so doing, even if the first soot concentration value is detected continuously, the first soot concentration value can be obtained with high accuracy for a long time period on the basis of the stable discharge voltage value since the center electrode 232 is subjected to cleaning processing by the reverse spark discharge without incurring the adherence of new adherents on the center electrode 232.
(3) In the implementation of the invention, the threshold No, which is the criterion in Step 1100, is not limited to "100" insofar as it falls within a range which allows the cleaning of the center electrode 232 to be effected properly, and the threshold No may be modified, as required. In addition, the threshold Mo, which is the criterion in Step 1200, is not limited to "100" insofar as it falls within a range in which the averaging processing of the peak hold voltage is carried out to an extent of being not affected by disturbances, and the threshold Mo may be modified, as required. In addition, the threshold To, which is the criterion in Step 5400, is not limited to "100," and may be modified, as required, in correspondence with the detection time of the first soot concentration detection signal.
(4) Further, in the first to third embodiments, although the threshold Mo of the forward spark discharge generating routine 5100 and the threshold No of the reverse spark discharge generating routine 5200 are set to "100, " these thresholds are not limited to the same. For example, the threshold To may be set to "100, " wherein in the case where T ≤ 50, the thresholds Mo and No may be set to "100," whereas in the case where T ≥ 50, the thresholds Mo and No may be set to "200."
(5) The respective winding directions of the low voltage coil 510 and the high voltage coil 520 around the iron core 530 in the high voltage generating circuit 500 may be mutually opposite winding directions unlike the above-described first or second embodiment. In this case, it suffices if, in the cleaning processing or detection of the discharge voltage value, the relay coil 621 is driven by the discharge sensor 610 such that the relay switches 622 to 625 of the relay 620 effect the closing or opening operation similar to those described in the first or second embodiment.
(6) In the above-described third embodiment, the winding direction of the low voltage coil of the high voltage generating circuit 500 or 3000 may be opposite to the winding direction in the third embodiment.
(7) The high voltage generating circuit 500 or 3000 is not limited to the ignition coil, and may be a transformer which has a low voltage coil and a high voltage coil an is adapted to boost a dc voltage to be applied to the low voltage coil and to generate a high voltage from the high voltage coil.
(8) In the implementation of the invention, instead of contact relays such as the relays 620 and 4200, it is possible to adopt contactless relays which are configured to function in the same way as the relays 620 and 4200. The relays 620 and 4200 may be connection changeover units which are generally configured to function in the same way as the aforementioned contact relays.
(9) The discharge sensor 200 is not limited to the spark plug type and is sufficient if it is a sensor having a pair of electrodes as discharge electrodes.
(10) The invention is not limited to the diesel internal combustion engine, and may be applied to various fuel combustion equipment making use of the combustion of fuel, such as gasoline internal combustion engines and external combustion engines.

This application is based on Japanese Patent application JP 2007-20477, filed January 31, 2007, and Japanese Patent application JP 2007-324035, filed December 14, 2007, the entire content of which is hereby incorporated by reference, the same as if fully set forth herein.

Although the invention has been described above in relation to preferred embodiments and modifications thereof, it will be understood by those skilled in the art that other variations and modifications can be effected in these preferred embodiments without departing from the scope and spirit of the invention.

For convenience, the following is a description of reference numerals as used in the drawings and in the foregoing Detailed Description of Exemplary Embodiments of the Invention:
120: exhaust pipe;
130: starting key switch;
140: battery;
200: discharge sensor;
232: center electrode;
240: outer electrode;
260: heater;
300: microcomputer;
400, 2200: switching circuits;
410, 2100: pulse signal generating circuits;
420, 2200: transistors;
500, 3000: high voltage generating circuits;
600, 4000: changeover circuits;
610, 4100: drive circuits;
620, 4200: relays; and
700: output processing circuit.

## Claims

1. A soot detecting apparatus comprising:
a high voltage generating unit for generating a high voltage;
a discharge sensor comprising a pair of electrodes disposed, in use, in an atmosphere to be detected for causing a spark discharge at a discharge voltage dependent upon soot concentration in the atmosphere when the high voltage is applied across the pair of electrodes;
a first detection unit for detecting a first discharge voltage value when the spark discharge occurs in the discharge sensor upon application of the high voltage of a predetermined voltage polarity;
a first output unit for determining a first soot concentration value based on the first discharge voltage value; and
a changeover unit for converting the predetermined voltage polarity of the high voltage to be applied to the pair of electrodes by the high voltage generating unit to an opposite voltage polarity for causing reverse spark discharge at the pair of electrodes of the discharge sensor.

2. The soot detecting apparatus according to claim 1, wherein the first output unit determines first soot concentration value based on a plurality of the first discharge voltage values.

3. The soot detecting apparatus according to claim 1 or 2, further comprising:
a second detection unit for detecting a second discharge voltage value in response to an occurrence of a reverse spark discharge in the discharge sensor upon application of the high voltage having the opposite voltage polarity; and
a second output unit for determining a second soot concentration value based on the second discharge voltage value.

4. The soot detecting apparatus according to claim 3, wherein the second output unit determines the second soot concentration value based on a plurality of the second discharge voltage values.

5. The soot detecting apparatus according to claim 3 or 4, further comprising:
an evaluating unit for evaluating soot concentration based on both the first soot concentration value and the second soot concentration value.

6. The soot detecting apparatus according to claim 5, wherein the evaluating unit evaluates the soot concentration by performing at least one of addition, subtraction, integration and division with respect to the first soot concentration value and the second soot concentration value.

7. The soot detecting apparatus according to one of the claims 1 to 6,
wherein the high voltage generating unit comprises:
a switching unit for effecting a switching operation; and
a voltage transforming unit comprising a low voltage coil inductively coupled to a high voltage coil, the low voltage coil being connected to the switching unit and the high voltage coil being connected to the discharge sensor, the voltage transforming unit, in use, boosting, as a result of the switching operation of the switching unit, a low voltage applied to the low voltage coil by a dc power supply to generate the high voltage from the high voltage coil, and
wherein the changeover unit converts the predetermined voltage polarity to the opposite voltage polarity by reversing the polarity of the connection of the low voltage coil to the dc power supply such that the voltage polarity of the high voltage to be applied to the pair of electrodes by the voltage transforming unit is changed to the opposite voltage polarity.

8. The soot detecting apparatus according to one of the claims 1 to 6,
wherein the high voltage generating unit comprises:
a switching unit for effecting a switching operation; and
a voltage transforming unit comprising a low voltage coil inductively coupled to a high voltage coil, the low voltage coil being connected to the switching unit and the high voltage coil being connected to the discharge sensor, the voltage transforming unit, in use, boosting as a result of the switching operation of the switching unit, a low voltage applied to the low voltage coil by a dc power supply to generate the high voltage from the high voltage coil; and
wherein the changeover unit reverses the connection of the high voltage coil to the pair of electrodes such that the predetermined voltage polarity of the high voltage to be applied to the pair of electrodes by the voltage transforming unit is changed to the opposite voltage polarity.

9. A soot detecting method, comprising:
a discharging step of applying a high voltage across a pair of electrodes of a discharge sensor, the pair of electrodes being disposed, in use, in an atmosphere to be detected, so as to cause spark discharge at a voltage dependent upon soot concentration in the atmosphere;
a first detection step of detecting a first discharge voltage value when the spark discharge has been caused in the discharge sensor in the discharging step;
a first output step of outputting a first soot concentration value based on the first discharge voltage value detected in the first detection step;
a changeover step of converting a predetermined voltage polarity of the high voltage applied across the pair of electrodes to an opposite voltage polarity; and
a reverse discharging step of causing reverse spark discharge at the voltage dependent upon soot concentration in the atmosphere when the high voltage is applied across the pair of electrodes of the discharge sensor at the opposite voltage polarity.

10. The soot detecting method according to claim 9, wherein, in the first output step, the first soot concentration value is outputted based on a plurality of the first discharge voltage values detected in a plurality of the first detection steps.

11. The soot detecting method according to claim 9 or 10, wherein the reverse discharging step is conducted before the discharging step.

12. The soot detecting method according to any one of claims 9 to 11, wherein the discharging step and the reverse discharging step are carried out alternately.

13. The soot detecting method according to one of the claims 9 to 12, wherein the discharging step and the reverse discharging step are respectively carried out a plurality of times.

14. The soot detecting method according to claim 13, wherein a number of times of the reverse discharging step is greater than or equal to 10% of a number of times of the discharging step.

15. The soot detecting method according to any one of claims 9 to 14, wherein the discharge sensor comprises an insulator for covering one of the pair of electrodes and a heater provided on the insulator, the soot detecting method further comprising:
a heater energizing step of combusting soot adhering to the insulator by energizing the heater,
wherein the reverse discharging step is carried out after the heater energizing step.

16. The soot detecting method according to any one of claims 9 to 15, further comprising:
a second detection step of detecting a second discharge voltage value when the reverse spark discharge has been caused in the discharge sensor in the reverse discharging step; and
a second output step of determining a second soot concentration value based on the second discharge voltage value detected in the second detection step.

17. The soot detecting method according to claim 16, wherein, in the second output step, the second soot concentration value is detemined based on a plurality of the second discharge voltage values detected in a plurality of the second detection steps.

18. The soot detecting method according to claim 16 or 17, further comprising:
an evaluation step of evaluating a soot concentration on based on both the first soot concentration value and the second soot concentration value.

19. The soot detecting method according to claim 18, wherein, in the evaluation step, the soot concentration is evaluated by performing at least one of addition, subtraction, integration and division with respect to the first soot concentration value and the second soot concentration value.
